# EUROPÄISCHE PATENTANMELDUNG

(11) **EP 3 042 837 A1**
(43) Veröffentlichungstag der Anmeldung: **13.07.2016**
(21) Anmeldenummer: 15194210.9
(22) Anmeldetag: 12.11.2015
(51) Int. Cl.: B62M 6/50, B62K 23/02, B62K 21/26, B62K 11/14

(54) **LENKER, INSBESONDERE FÜR EIN ZWEIRAD, MIT SENSORGRIFF**

(30) Priorität: 09.01.2015 DE 102015200179
(71) Anmelder: ROBERT BOSCH GMBH, 70442 Stuttgart (DE)
(72) Erfinder: Weissert, Mario, 72766 Reutlingen (DE); Mattes, Thomas, 78598 Koenigsheim (DE); Greiner, Rinaldo, 72762 Reutlingen (DE)

(57) **Zusammenfassung**

Die vorliegende Erfindung betrifft einen Lenker mit einem ersten Handgriff (11) und einem zweiten Handgriff (12), wenigstens einen Sensor (14), welcher am ersten Handgriff (11) oder am zweiten Handgriff (12) angeordnet ist, wobei der Sensor (14) in den Handgriff integriert ist, und eine Steuereinheit (15), welche mit dem Sensor (14) verbunden ist, wobei der Sensor (14) eingerichtet ist, mittels einer Hand eines Fahrers betätigt zu werden, um eine vorbestimmte Funktion einer Einrichtung auszuwählen, und wobei die Steuereinheit (15) eingerichtet ist, basierend auf dem Signal des Sensors (14) ein entsprechendes Funktionssignal an die Einrichtung abzugeben.

## Beschreibung

### Stand der Technik

Die vorliegende Erfindung betrifft einen Lenker, insbesondere für ein Zweirad, z.B. ein Elektrofahrrad, mit einem Sensorgriff, um vorbestimmte Funktionen einer Einrichtung mittels einer Hand oder beiden Händen eines Fahrers zu betätigen oder zu ändern oder zu beenden.

Zweiräder sind beispielsweise in Form von Elektrofahrrädern oder E-Scootern oder dergleichen bekannt. Bei Elektrofahrrädern ist beispielsweise zur Steuerung von Fahrradfunktionen wie z.B. einer Größe einer Unterstützung durch einen elektrischen Antrieb am Lenker eine Eingabeeinrichtung angeordnet, welche mittels Fingern betätigbar ist. Hierdurch können beispielsweise auf einem Display unterschiedliche Betriebszustände oder Ladezustände oder dergleichen des Elektromotors und eines Akkus angezeigt werden. Ferner können auch ein Licht oder dergleichen geschaltet werden. Weiterhin sind am Lenker üblicherweise auch Bremshebel angeordnet, sowie weitere Einrichtungen des Elektrofahrrads, z.B. eine Schiebehilfe. Durch die Anordnung am Lenker sind diese Vorrichtungen nun gefährdet, wenn das Elektrofahrrad umfällt oder gegen einen Gegenstand oder dergleichen anstößt. Weiterhin kann die am Lenker angeordnete Eingabeeinrichtung nicht zu viele Taster und Knöpfe aufweisen, da diese dann unübersichtlich und nicht mehr bedienbar wird. Von daher wäre es wünschenswert, eine Vereinfachung von Befehlseingaben am Lenker zu haben.

### Offenbarung der Erfindung

Der erfindungsgemäße Lenker, insbesondere für ein Zweirad, mit den Merkmalen des Anspruchs 1 weist demgegenüber den Vorteil auf, dass ein Fahrer über wenigstens einen Griff, welcher am Lenker angeordnet ist, verschiedenste Steuerungsvorgänge, insbesondere am Zweirad, ausüben kann. Durch die Anordnung eines Sensors am Griff kann der Sensor mittels einer Hand des Fahrers betätigt werden, so dass zusätzliche Steuerungsgeräte oder dergleichen am Lenker nicht notwendig anzubringen sind. Dadurch wird eine Gefahr einer Beschädigung derartiger Einrichtungen signifikant reduziert. Dies wird erfindungsgemäß dadurch erreicht, dass am Lenker wenigstens ein Sensor in einem ersten oder zweiten Griff angeordnet ist, wobei der eine Sensor in den Griff integriert ist. Ferner ist eine Steuereinheit vorgesehen, welche mit dem Sensor verbunden ist, wobei die Steuereinheit eingerichtet ist, basierend auf einem Sensorsignal ein entsprechendes Funktionssignal an eine Einrichtung abzugeben. Der Sensor kann dabei mittels einer Hand des Fahrers betätigt werden, um die vorbestimmte Funktion der Einrichtung auszuüben. Diese Ausübung kann beispielsweise eine Änderung eines Zustands oder ein Einschalten oder ein Abschalten oder dergleichen sein.

Die Unteransprüche zeigen bevorzugte Weiterbildungen der Erfindung.

Vorzugsweise ist wenigstens ein Sensor im ersten und zweiten Griff angeordnet. Dadurch kann eine einfache Unterscheidung für den Fahrer vorgesehen werden, mit welchem der Sensoren eine jeweilige Einrichtung des Zweirads geschaltet werden kann. Die Sensoren sind dabei bevorzugt jeweils für unterschiedliche Einrichtungen zuständig.

Besonders bevorzugt ist eine Vielzahl von Sensoren jeweils am ersten und zweiten Griff angeordnet. Hierbei ist es möglich, dass durch die Vielzahl der Sensoren eine gewisse Redundanz von Sensoren vorhanden ist, so dass bei einem ungenauen Druckvorgang, beispielsweise mittels eines Ballens einer Hand, auch sicher einer der Sensoren der Vielzahl von Sensoren betätigt wird, um den Befehlswunsch des Fahrers zu erfassen. Ferner ist es selbstverständlich auch möglich, dass mittels der Vielzahl von Sensoren auch eine Vielzahl von unterschiedlichen Einrichtungen betätigt wird.

Der Sensor am Griff ist vorzugsweise ein Drucksensor. Der Drucksensor ist besonders bevorzugt derart aufgebaut, dass er eine mehrstufige Auslösung von Funktionen aufweist. D.h., wenn der Drucksensor über einen bestimmten Wegpunkt gedrückt wird, kann haptisch dem Fahrer eine Rückmeldung gegeben werden, dass nun eine zweite Funktion einer Einrichtung z.B. zugeschaltet werden kann. Somit können einzelne Drucksensoren durch Mehrfachbelegung mehrere Funktionen verschiedener Einrichtungen steuern. Der Drucksensor ist vorzugsweise als Piezosensor oder Polymersensor ausgebildet. Die Sensoren können bevorzugt als Aktoren für eine Rückmeldung an den Nutzer, z.B. durch Vibration, genutzt werden.

Die Sensoren sind vorzugsweise an einer äußeren Oberfläche des Handgriffs angeordnet. Dadurch kann eine sichere und auch leicht optisch und haptisch erkennbare Betätigung der Sensoren ermöglicht werden. Insbesondere kann eine Sensor-Matrix dem Nutzer angepasst werden.

Alternativ oder zusätzlich sind die Sensoren an einer Innenfläche des Handgriffs, welche zum Lenkerrohr gerichtet ist, angeordnet. Hierdurch können sich die Sensoren an der Außenseite des Lenkerrohrs abstützen, so dass ebenfalls eine sichere Betätigung möglich ist. Um zu erkennen, wo sich die Sensoren befinden, können an der äußeren Oberfläche der Handgriffe farbliche Markierungen oder Erhebungen oder Vertiefungen oder dergleichen vorgesehen werden.

Gemäß einer weiter bevorzugten Ausgestaltung der Erfindung sind die Sensoren in ein Material des Handgriffs integriert. Mit anderen Worten sind die Sensoren zwischen einer äußeren Oberfläche und einer inneren Oberfläche der Handgriffe angeordnet. Eine Markierung der Position der Sensoren kann dabei ebenfalls mittels haptischer und/oder optischer Einrichtungen erfolgen.

Ferner betrifft die vorliegende Erfindung ein Zweirad, insbesondere ein Elektrofahrrad, mit einem erfindungsgemäßen Lenker.

Gemäß einer weiteren bevorzugten Ausgestaltung der vorliegenden Erfindung umfasst das Zweirad ferner eine Stromversorgungseinrichtung, insbesondere ein Akku, welcher mit dem Sensor und/oder der Steuereinheit verbunden ist. Dadurch ist eine einfache Stromversorgung der Sensoren und/oder der Steuereinheit, falls notwendig, gegeben. Besonders bevorzugt umfasst das Zweirad einen elektrischen Antrieb, welcher eine Stromversorgungseinrichtung aufweist, so dass die schon vorhandene Stromversorgungseinrichtung auch zur Versorgung der Sensoren am Handgriff sowie der zugehörigen Steuereinheit verwendet werden kann.

Gemäß einer weiteren bevorzugten Ausgestaltung der vorliegenden Erfindung ist die Einrichtung des Zweirads, deren Funktion mittels der Sensoren an den Handgriffen gesteuert wird, eine Bremse und/oder eine Schaltung und/oder ein Licht, insbesondere ein Vorderlicht oder Rücklicht, und/oder ein Signalgeberelement, z.B. ein Blinker oder eine Klingel, und/oder eine Steuereinheit zur Steuerung eines elektrischen Antriebs des Zweirads und/oder ein Display zur Änderung einer Anzeige im Display oder dergleichen.

Gemäß einer weiteren bevorzugten Ausgestaltung der vorliegenden Erfindung ist jedem Sensor der Vielzahl von Sensoren genau eine Funktion einer Einrichtung zugeordnet, wobei jede der Funktionen unterschiedlich ist.

Alternativ sind mehreren Sensoren der Vielzahl von Sensoren jeweils eine gleiche Funktion zugeordnet.

Weiter bevorzugt ist die Steuereinheit derart eingerichtet, dass eine Funktion nur dann ausgeführt wird, wenn von den Sensoren, denen eine gleiche Funktion zugeordnet ist, eine vorbestimmte Anzahl größer als 2 betätigt sind. Damit soll sichergestellt werden, dass bei beispielsweise einer Betätigung mittels einer Handfläche oder eines Handballens auch genau die vom Fahrer gewünschte Aktion ausgeführt wird.

Besonders bevorzugt sind der erste und zweite Handgriff am Lenker ortsfest, d.h., nicht drehbar wie z.B. bei einer Drehgriffschaltung, fixiert. Dadurch wird vermieden, dass ein Handgriff sich verdrehen kann, so dass die Sensoren an anderen Positionen am Lenker angeordnet werden, was zu einer Fehlbedienung des Fahrrads führen könnte.

Das Zweirad ist besonders bevorzugt ein Elektrofahrrad und insbesondere ein Pedelec, welches einen elektrischen Antrieb und eine Stromversorgung aufweist.

### Zeichnung

Nachfolgend werden unter Bezugnahme auf die begleitende Zeichnung Ausführungsbeispiele der Erfindung im Detail beschrieben. In der Zeichnung sind bzw. gleiche bzw. funktional gleiche Teile mit den gleichen Bezugszeichen bezeichnet. In der Zeichnung ist:
- Figur 1: eine schematische Ansicht eines Elektrofahrrads gemäß einem ersten Ausführungsbeispiel der Erfindung,
- Figur 2: eine schematische Darstellung einer Schaltungsanordnung des Elektrofahrrads von Figur 1,
- Figur 3: eine schematische Draufsicht auf einen Lenker des in Figur 1 gezeigten Elektrofahrrads,
- Figuren 4 und 5: schematische, perspektivische Ansichten eines Handgriffs im betätigten und unbetätigten Zustand und
- Figur 6: eine schematische Schnittansicht eines Handgriffs gemäß einem zweiten Ausführungsbeispiel der Erfindung.

### Ausführungsformen der Erfindung

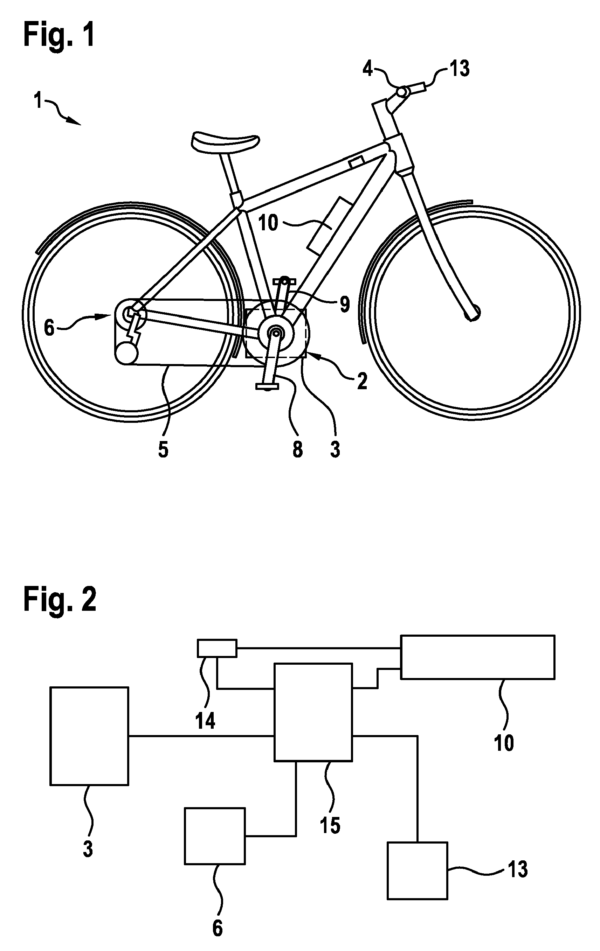

Nachfolgend wird unter Bezugnahme auf die Figuren 1 bis 5 ein Lenker 4 eines Zweirades 1, welches als Elektrofahrrad ausgebildet ist, im Detail beschrieben.

Wie aus Figur 1 ersichtlich ist, umfasst das Elektrofahrrad 1 einen elektrischen Antrieb 3, welcher im Bereich eines Kurbeltriebs 2 angeordnet ist. Der Kurbeltrieb 2 umfasst eine erste und eine zweite Kurbel 8, 9. Der elektrische Antrieb 3 ist mit einem Akku 10 verbunden, welcher am Rahmen des Elektrofahrrads angeordnet ist. Das Elektrofahrrad umfasst ferner eine Schaltung 6, welche über eine Kette 5 mit dem Kurbeltrieb 2 verbunden ist.

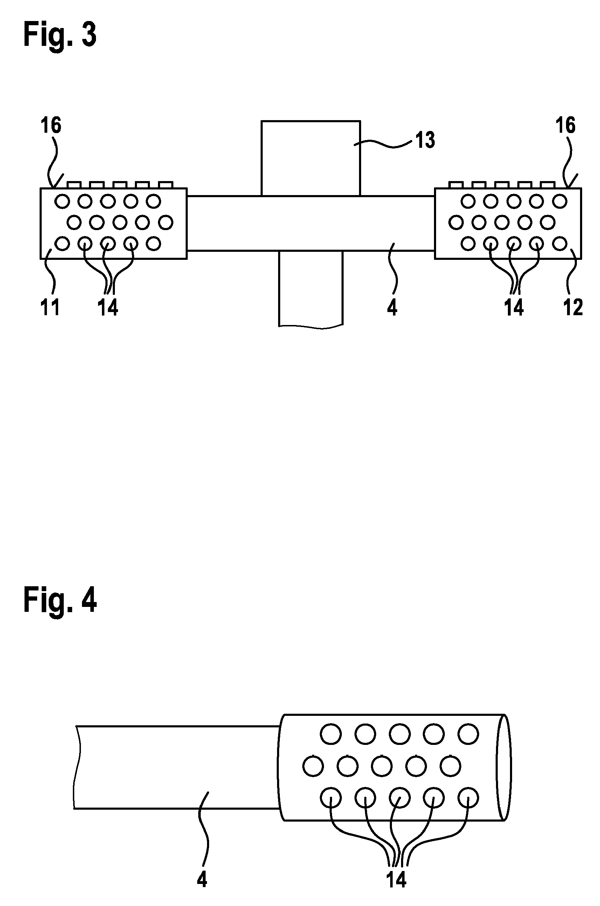

Erfindungsgemäß ist nun, wie insbesondere aus Figur 3 ersichtlich ist, am Lenker 4 ein erster Handgriff 11 und ein zweiter Handgriff 12 vorgesehen. Jeder der Handgriffe 11, 12 weist dabei eine Vielzahl von Sensoren 14 auf. Aus Übersichtlichkeitsgründen sind nicht alle Sensoren mit einem Bezugszeichen versehen.

Die Sensoren 14 des ersten Ausführungsbeispiels sind an einer äußeren Oberfläche 16 der Handgriffe angeordnet und stehen von der Oberfläche 16 vor. Dadurch sind die Sensoren 14 einfach haptisch und optisch erkennbar.

Erfindungsgemäß kann nun jedem der Vielzahl von Sensoren eine unterschiedliche Funktion am Zweirad 1 zugeordnet sein. Alternativ ist es auch möglich, dass mehreren Sensoren 14 eine gleiche Funktion zugeordnet wird. Wenn dies der Fall ist, kann insbesondere auch vorgesehen werden, dass die Funktion erst nach Betätigung von zwei oder mehr der Sensoren mit gleicher Funktion ausgeführt wird. Hierdurch wird ein zusätzliches Sicherheitsmerkmal für eine exakte Bedienung vorgesehen.

Wie aus der schematischen Ansicht von Figur 2 ersichtlich ist, sind die Sensoren 14 mit einer Steuereinheit 15 verbunden. Die Steuereinheit 15 ist auch mit einer Einrichtung, welche eine Funktion nach Betätigung eines Sensors 14 ausführen soll, verbunden, wobei in diesem Ausführungsbeispiel beispielhaft eine Anzeigeeinrichtung 13, der elektrische Antrieb 3 und die Schaltung 6 dargestellt sind. Es sei jedoch ausdrücklich angemerkt, dass auch andere Einrichtungen des Zweirads betätigt werden können, wobei die Betätigung sowohl ein Einschalten als auch ein Ausschalten als auch eine Änderung eines Zustands bedeutet.

Die Steuereinheit 15 sowie die Sensoren 14 sind dabei jeweils mit dem Akku 10 verbunden, um eine Stromversorgung sicherzustellen.

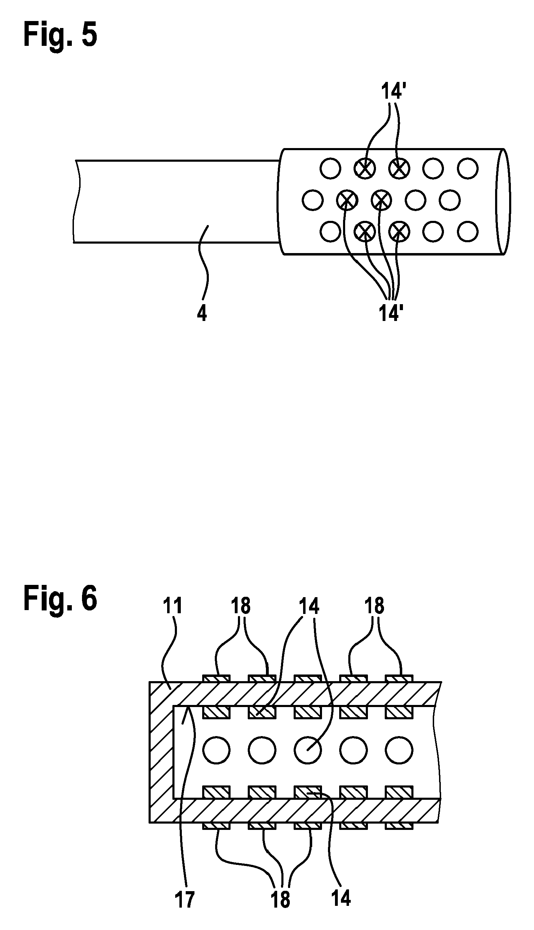

In den Figuren 4 und 5 wird verdeutlicht, wie der Schaltungsvorgang zur Änderung einer Funktion einer Einrichtung vorgesehen ist. Figur 4 zeigt dabei einen Zustand, in welchem keiner der Sensoren 14 betätigt ist. Figur 5 zeigt einen Zustand, in welchem sechs Sensoren 14' betätigt sind, welche in Figur 5 mit einem Kreuz gekennzeichnet sind. Diese Betätigung erfolgt mit einer Hand eines Fahrers, beispielsweise mit einem Ballen. In diesem Ausführungsbeispiel sind den sechs Sensoren 14', welche gerade betätigt werden, die jeweils gleiche Funktion zugeordnet, so dass diese ausgeführt werden kann. Die Funktion kann beispielsweise das Schalten der Schaltung 6 sein oder das Einschalten oder Ausschalten eines Lichts oder eine Steuerung des elektrischen Antriebs 3 oder eine Änderung einer Anzeige in der Anzeigeeinrichtung 13.

Die Verwendung von Drucksensoren ist besonders bevorzugt, da hier eine einfache und sichere Bedienung durch eine Hand des Fahrers möglich ist ohne die Hand vom Lenker zu nehmen. Ferner können die Drucksensoren einfach in die Handgriffe 11, 12 integriert werden.

Es sei weiterhin angemerkt, dass durch die vorliegende Erfindung auch keine Bremshebel mehr am Lenker 4 vorgesehen werden müssen. Ein Bremsen kann beispielsweise durch Betätigung eines oder mehrerer Sensoren 14 an den Handgriffen 11, 12 ermöglicht werden. Dabei können beispielsweise einer oder mehrere Sensoren am ersten Handgriff 11 für eine Vorderradbremse und einer oder mehrere Sensoren am zweiten Handgriff 12 für eine Hinterradbremse vorgesehen werden. Dabei können die Sensoren auch mehrfach in Stufen aktivierbar sein, um eine Stärke des Bremseingriffs auszuführen. Dies kann beispielsweise durch mechanische Widerstände im Sensor selbst realisiert werden, so dass erst nach Überwindung eines oder mehrerer mechanischer Widerstände eine stärkere Bremsung des Elektrofahrrads erfolgt.

Erfindungsgemäß kann somit ein sichereres Fahren ermöglicht werden, da der Fahrer immer beide Hände am Lenker haben kann und gleichzeitig auch gewünschte Funktionen von Einrichtungen des Zweirads ausführen kann.

Figur 6 zeigt eine alternative Ausgestaltung eines möglichen Handgriffs. Die Sensoren 14 des zweiten Ausführungsbeispiels sind dabei an einer Innenseite 17 des ersten Handgriffs 11 angeordnet. Dadurch sind die Sensoren insbesondere vor äußeren Einflüssen geschützt. An der äußeren Oberfläche 16 können dann entsprechende Markierungen 18 oder dergleichen vorgesehen werden, um die Position der innen angeordneten Sensoren 14 aufzuzeigen.

Die Erfindung ist besonders bevorzugt bei einem Elektrofahrrad verwendbar, welches schon einen Akku 10 zur Stromversorgung der Sensoren 14 und/oder der Steuereinheit 15 aufweist. Auch kann auf einfache Weise hierbei eine Nachrüstung derartiger Elektrofahrräder erfolgen.

## Patentansprüche

1. Lenker mit einem ersten Handgriff (11) und einem zweiten Handgriff (12),
- wenigstens einen Sensor (14), welcher am ersten Handgriff (11) oder am zweiten Handgriff (12) angeordnet ist,
- wobei der Sensor (14) in den Handgriff integriert ist, und
- eine Steuereinheit (15), welche mit dem Sensor (14) verbunden ist,
- wobei der Sensor (14) eingerichtet ist, mittels einer Hand eines Fahrers betätigt zu werden, um eine vorbestimmte Funktion einer Einrichtung auszuwählen, und
- wobei die Steuereinheit (15) eingerichtet ist, basierend auf dem Signal des Sensors (14) ein entsprechendes Funktionssignal an die Einrichtung abzugeben.

2. Lenker nach Anspruch 1, **dadurch gekennzeichnet, dass** wenigstens ein Sensor (14) am ersten Handgriff und ein Sensor (14) am zweiten Handgriff angeordnet ist.

3. Lenker nach einem der vorhergehenden Ansprüche, **dadurch gekennzeichnet, dass** eine Vielzahl von Sensoren (14) am ersten und zweiten Handgriff (11, 12) angeordnet ist.

4. Lenker nach einem der vorhergehenden Ansprüche, **dadurch gekennzeichnet, dass** der Sensor (14) ein Drucksensor, insbesondere ein piezobasierter Drucksensor, ist.

5. Lenker nach einem der vorhergehenden Ansprüche, **dadurch gekennzeichnet, dass** die Sensoren (14) an einer äußeren Oberfläche (16) der Handgriffe (11, 12) angeordnet sind und/oder an einer Innenseite (17) der Handgriffe (11, 12) angeordnet sind und/oder in ein Handgriff-Material der Handgriffe integriert sind.

6. Zweirad, insbesondere Elektrofahrrad, umfassend einen Lenker (4) nach einem der vorhergehenden Ansprüche.

7. Zweirad nach Anspruch 6, ferner umfassend eine Stromversorgungseinrichtung (10), welche die Sensoren (14) und die Steuereinheit (15) mit Strom versorgt.

8. Zweirad nach Anspruch 7, ferner umfassend einen elektrischen Antrieb (3), welcher mit der Stromversorgungseinrichtung (10) verbunden ist und von der Stromversorgungseinrichtung (10) mit Strom versorgt wird.

9. Zweirad nach einem der Ansprüche 6 bis 8, **dadurch gekennzeichnet, dass** die mittels der Sensoren (14) zu betätigende Einrichtung eine Bremse und/oder eine Schaltung (6) und/oder einen Schalter eines Lichts und/oder einen Signalgeber, insbesondere ein Blinker oder eine Klingel und/oder eine Änderung einer Unterstützung durch einen elektrischen Antrieb (3) und/oder eine Änderung einer Anzeige in einer Anzeigeeinrichtung (13) umfasst.

10. Zweirad nach einem der Ansprüche 6 bis 9, **dadurch gekennzeichnet, dass** jedem Sensor der Vielzahl von Sensoren 14 eine andere Funktion einer Einrichtung zugeordnet ist.

11. Zweirad nach einem der Ansprüche 6 bis 9, **dadurch gekennzeichnet, dass** mehreren Sensoren (14) der Vielzahl von Sensoren (14) eine gleiche Funktion einer Einrichtung zugeordnet ist.

12. Zweirad nach Anspruch 11, **dadurch gekennzeichnet, dass** die Steuereinheit (15) eingerichtet ist, die Funktion der Einrichtung nur dann auszuführen, wenn von den Sensoren, denen eine jeweils gleiche Funktion der Einrichtung zugeordnet ist, eine vorbestimmte Anzahl größer oder gleich 2 betätigt sind.

13. Zweirad nach einem der Ansprüche 6 bis 12, **dadurch gekennzeichnet, dass** der erste Handgriff (11) und der zweite Handgriff (12) ortsfest am Lenker (4) fixiert sind.
